# EUROPÄISCHE PATENTSCHRIFT

(11) **EP 2 629 280 B1**
(45) Veröffentlichungstag und Bekanntmachung des Hinweises auf die Patenterteilung: **01.02.2017**
(21) Anmeldenummer: 12155450.5
(22) Anmeldetag: 14.02.2012
(51) Int. Cl.: G09B 25/02

(54) **Lehrsystem zum Prüfen und Sortieren unterschiedlicher Werkstücke**
Teaching system for testing and sorting different workpieces
Système d'apprentissage pour la vérification et le tri de différentes pièces usinées

(43) Veröffentlichungstag der Anmeldung: 21.08.2013
(73) Patentinhaber: Wuekro GmbH, 97424 Schweinfurt (DE)
(72) Erfinder: Büttner, Leonhard, 97422 Schweinfurt (DE)
(74) Vertreter: Götz, Georg Alois

(56) Entgegenhaltungen:
- DE-A1-102007 029 037
- BEN ERWIN, MARTHA CYR, CHRIS ROGERS: "LEGO Engineer and RoboLab: Teaching Engineering with LabVIEW from Kindergarten to Graduate School", International Journal of Engineering Education, Bd. 16, Nr. 3 2000, Seiten 181-192, XP002680598, Gefunden im Internet: URL:http://www.ijee.ie/articles/Vol16-3/ij ee1121.pdf [gefunden am 2012-07-23]
- TORSTEN K IVERSEN ET AL: "Model-checking real-time control programs: verifying LEGO MINDSTORMSTM systems using UPPAAL", PROCEEDINGS / EUROMICRO RTS 2000 : 12TH EUROMICRO CONFERENCE ON REAL-TIME SYSTEMS, 21. Juni 2000 (2000-06-21), Seiten 147-155, XP031665177, STOCKHOLM, SWEDEN ISBN: 978-0-7695-0734-7
- Markus Weber: "Vermittlung von informatischenGrundkonzepten der Realschulbildunganhand einer robotergesteuertenLagerverwaltung", , 2008, Seiten i-viii,1-84, XP002680600, Friedrich-Alexander Universität Erlangen-Nürnberg Gefunden im Internet: URL:http://www.robinfun.de/uswa/ha-weber.p df [gefunden am 2012-07-23]
- KISS G: "Using the Lego-Mindstorm kit in German Computer Science Education", APPLIED MACHINE INTELLIGENCE AND INFORMATICS (SAMI), 2010 IEEE 8TH INTERNATIONAL SYMPOSIUM ON, 28. Januar 2010 (2010-01-28), Seiten 101-104, XP031644198, IEEE, PISCATAWAY, NJ, USA ISBN: 978-1-4244-6422-7
- KUO-KAI HSU ET AL: "Build a Home Security Surveillance System Using LEGO MINDSTORMS NXT", INTELLIGENT INFORMATION HIDING AND MULTIMEDIA SIGNAL PROCESSING, 2009. IIH-MSP '09. FIFTH INTERNATIONAL CONFERENCE ON, 12. September 2009 (2009-09-12), Seiten 254-257, XP031569660, IEEE, PISCATAWAY, NJ, USA ISBN: 978-1-4244-4717-6

## Beschreibung

Die Erfindung betrifft ein Lehrverfahren sowie eine zu dessen Durchführung geeignete, didaktische Lehrvorrichtung.

Derartige Lehrsysteme sind in der Ausbildung als Lehrkoffer für Elektrotechnik und Elektronik beispielsweise aus DE 10 2007 029 037 A1 bekannt. Danach ist in einem Gehäuse eine Grundplatte angeordnet, in der viele Buchsen eingebaut sind. Auf der Rückseite der Grundplatte ist zumindest ein Teil der Buchsen verdrahtet. Bauelemente sind in die Buchsen so einsteckbar, dass über die vorhandene Verdrahtung funktionsfähige Schaltungen hergestellt werden können. Zudem weist die Grundplatte eine Aufnahme für ein komplettes, professionelles Messgerät auf, das sich im Lehrkoffer mit Verschließen des Kofferdeckels fixieren lässt.

Aus "'LEGO Engineer and RoboLab: Teaching Engineering with LabVIEW from Kindergarten to Graduate School', BEN ERWIN, MARTHA CYR and CHRIS ROGERS, Int. J. Engng Ed. Vol. 16, No. 3, pp. 181-192, 2000, TEMPUS Publications, 2000" ist eine Lehrvorrichtung bekannt, bei der blaue LEGO-Steine mit Hilfe eines LEGO-Lichtsensors von anderen LEGO-Steinen unterschieden und von einem Förderband in einem Sammelbehälter gestoßen werden.

Dem gegenüber liegt der Erfindung die Aufgabe zugrunde, einen Lehrkoffer mit einem didaktisch-inhaltlich anderen Anwendungsbereich zu schaffen. Zur Lösung wird auf das im Anspruch 1 angegebene didaktische Lehrverfahren und die im Anspruch 4 angegebene, didaktische Lehrvorrichtung verwiesen, die jeweils auf das Prüfen und Sortieren unterschiedlicher Werkstücke gerichtet sind. Optionale vorteilhafte Ausführungsformen der Erfindung ergeben sich aus den abhängigen Ansprüchen.

Mit der Erfindung lässt sich in didaktisch anschaulicher Welse ein Prüfen und Sortieren unterschiedlicher Werkstücke demonstrieren, wie es in industriellen Fertigungsprozessen üblich ist. Die Werkstücke werden zunächst in einem Aufnahmelager bereitgehalten und daraus zu einer Sensorik transportiert, welche die Werkstücke auf bestimmte Materialeigenschaften und Beschaffenheit hin abtastet bzw. prüft. Die Sensorik kann dabei sowohl digitale als auch analoge Sensoren umfassen. Die Sensorausgänge werden von einer Steuerung erfasst, worin die entsprechenden Signale verarbeitet und/oder ausgewertet werden. Anhand der Verarbeitungsresultate werden die Werkstücke sortiert und je nach Beschaffenheit an bestimmte Lagerstellen abgelegt. Der mit der Erfindung erzielte Vorteil besteht darin, dass anhand eines kompakten Lehrsystems, das sich leicht tragbar ausführen lässt, wichtige Abläufe und Bauelemente der Mechatronik und Industrieelektronik Fachleuten in Aus- und Weiterbildung anschaulich und übersichtlich nahe gebracht werden können.

Gemäß der Erfindung wird das Werkstück zweckmäßig über Transport-, Förder- und/oder Positioniermittel mit einem drahtlos mit Daten beschreibbaren und auslesbaren Funketikett versehen und mit einem drahtlos per Funk arbeitenden Schreibmittel in Wirkungsverbindung gebracht, welches die Steuerung zum Beschreiben des Funketiketts des abgetasteten Werkstücks mit Informationen entsprechend den verarbeiteten Abtastsignalen aus den Sensormitteln ansteuert Über die Funketiketten lassen sich Möglichkeiten der drahtlosen Datenkommunikation zwischen dem jeweiligen Werkstück und einem auf der Basis der an sich bekannten RFID-Technologie (RFID = Radio-Frequenz-Identifikation) arbeitenden Kommunikationsprozessor nahe bringen. Der drahtlose Datenfluss kann aber nicht nur in Richtung vom Werkstück zur Steuerung bzw. einem zugehörigen Kommunikationsprozessor, sondern auch umgekehrt vom Kommunikationsprozessor oder der sonstigen Steuerung zum mit dem Funketikett versehenen Werkstück erfolgen. Dem dient gemäß der Erfindung, dass mittels der Steuerung das Werkstück mit der beschriebenen Funketikette in Wirkungsverbindung mit einem drahtlos per Funk arbeitenden Lesemittel gebracht wird, über welches die Steuerung abhängig vom Leseergebnis die Transport-, Förder- und/oder Positioniermittel so ansteuert, dass das abgetastete Werkstück entsprechend seiner Beschaffenheit an eine vorbestimmte Sortier-Lagerstelle abgelegt wird.

Die Prüf- und Sortiervorgänge bei Werkstücken lassen sich nach einer Erfindungsausbildung deutlich und industrienah darstellen, bei der ein Manuell-Betrieb selektierbar ist, bei dem auf Betätigung eines manuell betätigbaren Eingabeelements je ein einzelner Schritt des Prüfens und/oder Sortierens sukzessive bzw. nacheinander durchgeführt wird. Gegebenenfalls kann dieser Manuell-Betrieb im Lehrsystem alternativ oder zusätzlich zu einem Automatikbetrieb implementiert sein.

Nach einer Erfindungsausbildung wird das jeweilige Werkstück mittels des oder der Sensormittel auf Anwesenheit, Farbe, hell/dunkel, Graustufen, Werkstoffbeschaffenheit und/oder geometrische Abmessungen hin abgetastet bzw. geprüft. Insbesondere wenn die genannten Umstände und Eigenschaften in Kombination miteinander geprüft werden, lässt sich mit verhältnismäßig wenig Aufwand auf kleinem Raum eine industrienahe Werkstück-Prüfung vorführen.

Der Einsatzmobilität dient es, wenn nach einer Erfindungsausbildung die didaktische Lehrvorrichtung als Lehrkoffer mit auf- und zumachbaren sowie wiederverschließbaren Kofferdeckel ausgebildet ist. In einem solchen Lehrkoffer können neben der Werkstück-Aufnahmeeinrichtung, der Sensorik, der oder den Sortier-Lagerstellen, dem oder den Werkstück-Positioniermitteln und der etwaigen internen Steuerung oder der Schnittstelle für eine externe Steuerung ein oder mehrere drahtlos per Funk arbeitende Schreib- und/oder Lesemittel angeordnet sein, die mit der Steuerung Signale austauschen, beispielsweise über die Schnittstelle zum Anschluss von extern. So besteht die Erfindung darin, dass das Prüf- und Sortiersystem ein oder mehrere, jeweils drahtlos per Funk arbeitende Schreib- und/oder Lesemittel umfasst, die mit der Steuerung gekoppelt und einem drahtlos mit Daten beschreibbaren und auslesbaren Funketikett eines jeweiligen Werkstücks zugeordnet sind.

Die Erfindung besteht auch darin, dass die Steuerung zur Bewegung oder Positionierung des jeweiligen Werkstücks, zum Verarbeiten der Ausgangssignale der Sensormittel und/oder zum Auslesen oder Beschreiben des Werkstück-Funketiketts programmierbar oder sonst einstellbar ist. Damit ist Aus- und Weiterzubildenden die Möglichkeit eröffnet, Programmierkenntnisse beispielsweise mit frei programmierbaren oder Speicherprogrammierbaren Steuerungen zu erwerben, wobei in diesen Funktionen beziehungsweise Softwaretreiber zum Ansteuern der Aufnahmeeinrichtung, zum Besetzen der Sortier-Lagerstellen, zum Ansteuern der Werkstück-Positioniermittel sowie zum Auslesen der Sensormittel-Ausgangssignale nebst deren Verarbeitung zu implementieren wären.

Eine Erfindungsausbildung besteht darin, dass das oder die Positioniermittel eine Fördereinrichtung umfassen, welche eingangsseitig der Aufnahmeeinrichtung und ausgangsseitig den Sortier-Lagerstellen zugeordnet und/oder derart angeordnet ist, dass das jeweilige Werkstück an dem oder den Sensormitteln und/oder gegebenenfalls an dem oder den Schreib- und/oder Lesemitteln vorbei führbar ist. Die Fördereinrichtung lässt sich in einfacher Weise als Förderband realisieren, die sich beispielsweise in Koffer-Längsrichtung erstreckt und dabei den größten Teil der Längserstreckung abdeckt. In diesem Zusammenhang besteht eine Erfindungsausbildung in einer Lehrvorrichtung mit einer länglichen Grundform mit einer Längsrichtung, wobei sich die Fördereinrichtung entlang des größten Teils der Längsrichtung erstreckt.

Eine Weiterbildung der erfindungsgemäßen Lehrvorrichtung besteht darin, dass das oder die Positioniermittel ein oder mehrere mechanische Werkstück-Verstellorgane, beispielsweise Linearschieber, umfassen, die zum Bewegen der Werkstücke angeordnet sind. Die Verstellung der Werkstücke lässt sich insbesondere bei Verwendung von Linearschiebern anschaulich wahrnehmen und verfolgen, zudem lässt sich die Implementierung entsprechender, relativ einfacher Softwaretreiber üben.

Eine erfindungsgemäße Weiterbildung der Lehrvorrichtung besteht im Einsatz eines oder mehrerer manuell betätigbarer Ein- und/oder Ausgabemittel beispielsweise in Form eines beleuchtbaren Tastenfelds oder Touchpads. Zweckmäßig können das eine oder die mehreren Ein- und/oder Ausgabemittel mit der Steuerung gekoppelt oder koppelbar und/oder baulich integriert sein. Eine besonders zweckmäßige Realisierung der Ein- und/oder Ausgabemittel besteht in einem an sich bekannten IndustrieTastenfeld mit beschrifteten und/oder beleuchteten Tastern oder hin- und her bewegbaren Umschaltern.

Um beim Lehrbetrieb möglichst industrienahe Umstände zu realisieren, ist nach einer Weiterbildung der erfindungsgemäßen Lehrvorrichtung eine Sicherheitseinrichtung zur Unterbrechung einer Stromversorgung und damit zum Stilliegen aller Antriebe von Stellgliedern und Transport-, Positionier- und/oder Fördereinrichtungen vorgesehen. Besonderes realitätsnah ist es, einen manuell betätigbaren Not-Aus-Taster als Sicherheitseinrichtung oder eines Teils davon zweckmäßig in exponierter Stellung mit auffälliger Farbgebung anzuordnen.

Gemäß einer Weiterbildung der erfindungsgemäßen Lehrvorrichtung ist die Sicherheitseinrichtung um eine oder mehrere Überlaufsicherungen erweitert, welche alternativ auch unabhängig von der Sicherheitseinrichtung realisiert sein können. In funktionsgerechter Reichweite oder in Wirkungsverbindung mit den Überlaufsicherungen befinden sich Positioniermittel zur Handhabung der Werkstücke und/oder Sortierlagerstellen, um sicherzustellen, dass auf diesen nicht zu viele sortierte Werkstücke abgestellt werden. Die Überlaufsicherungen können beispielsweise mit Lichtschranken verwirklicht sein,

Gemäß einer Erfindungsweiterbildung ist die Lehrvorrichtung mit Werkstücken ausgestattet, die Werkstoffe aus Metall oder Kunststoff umfassen und/oder unterschiedliche geometrische Abmessungen aufweisen. Damit lässt sich in didaktisch anschaulicher Weise das Prüfen von in der Industrie häufig eingesetzter Werkstoffen nebst wichtiger Eigenschaften (z.B. Abmessungen) prüfen. Damit korrespondiert eine andere Erfindungsweiterbildung, nach der die Lehrvorrichtung als Sensormittel zum Erkennen, Abtasten oder Prüfer der Werkstücke kapazitive, optische, induktive und/oder Ultraschall-Sensoren umfasst. Die genannten Sensortypen können sowohl binäre als auch analoge Ausgangssignale ausgeben und/oder entweder einzeln oder in Kombination oder auch in Unterkombinationen bei der erfindungsgemäßen Lehrvorrichtung Einsatz finden.

Die bereits oben angesprochene Weiterbildung der erfindungsgemäßen Lehrvorrichtung als kompakter, tragbarer Lehrkoffer mit wiederholt auf- und zumachbaren Kofferdeckel lässt sich noch dahingehend konkretisieren, dass die Werkstück-Aufnahmeeinrichtung eine derart zur Innenseite des Deckels ausgerichtete Füllöffnung aufweist, dass diese Füllöffnung mit Zumachen, beispielsweise Zuklappen, des Kofferdeckels verschließbar ist. Gleichzeitig lassen sich dadurch nicht nur die Anordnung der Werkstücke in der Aufnahmeeinrichtung, sondern auch die Anordnung der Aufnahmeeinrichtung im Koffer selbst stabilisieren und fixieren.

Eine Weiterbildung der erfindungsgemäßen Lehrvorrichtung besteht darin, dass die Schnittstelle zum Anschluss einer externen Steuerung mit einer Adaptereinrichtung beispielsweise In plattenartiger Bauform realisiert ist, wobei die Adaptereinrichtung mit einer variierbaren Anschlussbelegung zur Anpassung an oder Verbindung mit anschlusstechnisch inkompatiblen, externen Steuerungen ausgebildet ist Damit lässt sich in didaktisch transparenter Weise die Steuerungsschnittstelle der Lehrvorrichtung beispielsweise an die jeweils spezifische Pinbelegung unterschiedlicher industrieller, frei- oder speicherprogrammierbarer Steuerungen anpassen.

Weitere Einzelheiten, Merkmale, vorteilhafte Wirkungen und Merkmalskombinationen der Erfindung ergeben sich aus der nachfolgenden Beschreibung beispielhafter bevorzugter Ausführungsformen der Erfindung und den Zeichnungen. Diese zeigen in:
- Figur 1: einen Lehrkoffer mit aufgeklapptem Kofferdeckel, ausgestattet mit zwei RFID-Schreib-/Leseeinheiten in perspektivischer Darstellung,
- Figur 2: einen alternative Ausführung des Lehrkoffers in geöffnetem Zustand ohne RFID-Schreib-/Leseeinheiten in der Draufsicht,
- Figur 3: einen vergrößert-perspektivischen Ausschnitt gemäß Bereich III in Figur 2,
- Figur 4,5: jeweils eine Draufsicht auf den Lehrkoffer mit fertig sortiertem Werkstück auf einer ersten beziehungsweise zweiten Sortier-Lagerstelle,
- Figur 6: eine Draufsicht auf den Lehrkoffer mit fertig sortiertem Werkstück auf einer Ausschuss-Lagerstelle am Ende eines Förderbandes,
- Figur 7: in Draufsicht eine alternative Ausführung des Lehrkoffers mit zwei Funk/RFID-Schreib/Leseeinheiten,
- Figur 8: in perspektivischer Darstellung einen Satz unterschiedlich beschaffener, zu prüfender Werkstücke für den Lehrkoffer,
- Figur 9: in perspektivischer Darstellung eine Anordnung eines Lehrkoffers mit einer externen, verbundenen Speicherprogrammierbaren Steuerung (SPS),
- Figur 10: eine Stirnansicht auf eine zum erfindungsgemäßen Lehrsystem gehörende Adapterplatte

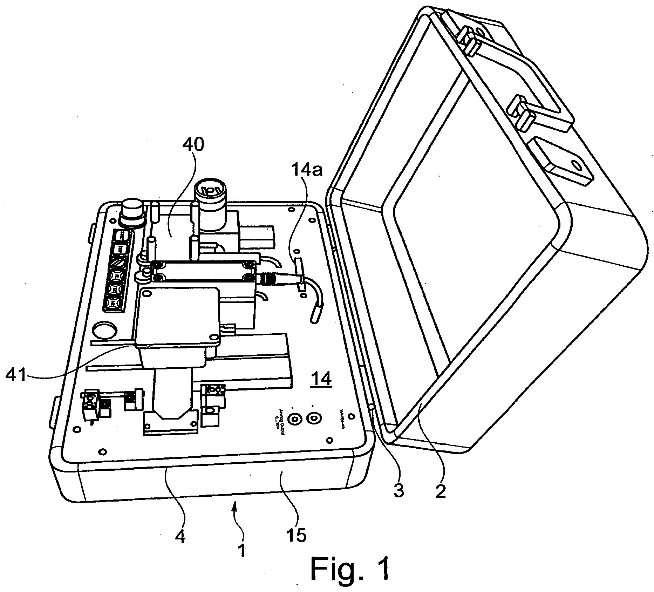

Die Figur 1 zeigt das erfindungsgemäße Lehrsystem in der Ausbildung als kompakter verschließbarer Lehrkoffer 1, wobei der Kofferdeckel 2 über Scharnierverbindungen 3 mit dem Koffer-Grundrahmen 4 verbunden ist und sich im aufgeklappten Zustand befindet.

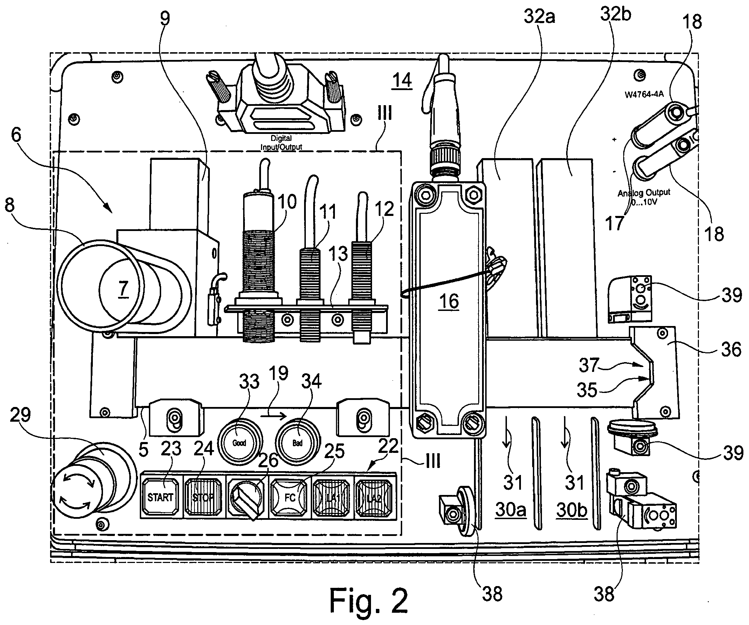

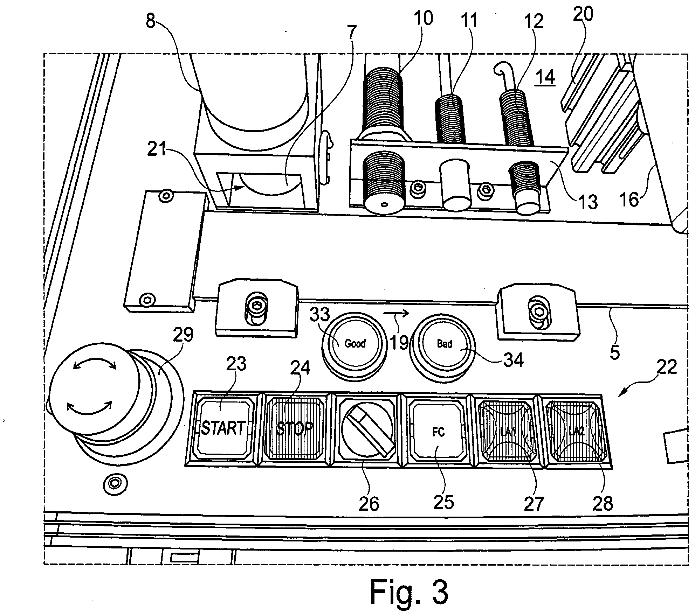

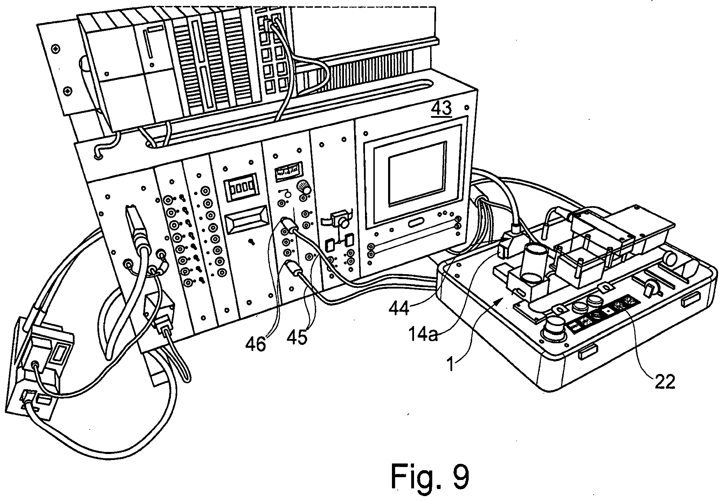

Gemäß Draufsicht der Figur 2 (diese zeigt ein dahingehend nicht erfindungsgemäßes Lehrsystem, dass dieses keine drahtlos per Funk arbeitende Schreib- und/oder Lesemittel (40,41) enthält) erstreckt sich innerhalb der Koffer-Grundfläche ein Förderband 5 über den größten Teil der Längserstreckung eines länglich-rechteckigen Koffer-Grundrahmens 4 oder Kofferunterteils 15. An seinem Eingangsende wird das Förderband 5 von einer Aufnahmeeinrichtung 6 aus mit einzelnen Werkstücken 7 beschickt. Diese sind in einem zylindrischen, durchsichtigen Werkstückfallmagazin 8 bereit gehalten, das an seinem unteren Ende mit einem elektrisch betätigbaren Werkstück-Linearschieber 9 zusammenwirkt. Dieser dient dazu, im Magazin 8 bevorratete Werkstücke 7 an dessen unterem Ende beziehungsweise Ausgang 21 (vgl. Fig. 3) auf das Förderband 5 zur nachfolgenden Prüfung zu schieben. Dazu ist das Förderband 5 in der Reichweite mehrerer digitaler Sensoren angeordnet, nämlich eines kapazitiven Sensors 10, eines optischen Sensors 11 und eines induktiven Sensors 12. Diese generieren jeweils binäre Ausgangssignale zur Auswertung durch eine elektronische Steuerung 43 (vgl. Fig.9). Die genannten Sensoren 10, 11, 12 sind am Rand des Förderbandes 5 durch ein gemeinsames Winkelprofil 13 gehalten, das in einen Oberboden 14 des Kofferunterteils 15 (siehe Figur 1) eingeschraubt ist.

Nach Passieren der digitalen Sensoren 10,11,12 durchläuft das Förderband 5 den Wirkungsbereich eines darüber angeordneten Ultraschallsensors 16, dessen analoges, für die Steuerung 43 bestimmtes Ausgangssignal einer Höhenmessung am jeweiligen Werkstück entspricht. Das die Höhenmessung repräsentierende Analogsignal lässt sich an den AnalogBuchsen 17 mittels eingeführter Analogstecker 18 beispielsweise der Steuerung 43 abgreifen.

In den Koffer-Oberboden 14 ist noch eine digitale Ein-/Ausgangsschnittstelle 14a mit Buchsen für beispielsweise 37 Pins einer externen, insbesondere Speicherprogrammierbaren Steuerung 43 eingelassen. Gemäß Figur 2 ist ein Stecker der externen Steuerung 43 in die Buchsen der Schnittstelle 14a eingeführt. Die Belegung der Pins der Mehrpolbuchse der Ein-/Ausgangsschnittstelle 14a ist wie folgt:

Belegung der Pins Systembuchse SUB-D 37-polig

| | | |
|---|---|---|
| PIN | SPS-Funktion | Förderband-Funktion |
| 1 | 24V+ | 24V+ Versorgungsspannung |
| 2 | E0.0 | Sensor für Wegmessung am Transportband, 1 Impuls= 5mm Verfahrweg |
| 3 | E0.1 | Microschalter am Fallmagazin für Schleber eingefahren, NO |
| 4 | E0.2 | Microschalter am Fallmagazin für Schieber ausgefahren, NO |
| 5 | E0.3 | Einweglichtschranke im Fallmagazin, 1=Teil vorhanden, NO |
| 6 | E0.4 | Kapazitiver Sensor an der Prüfeinrichtung, Teil vorhanden, NO |
| 7 | E0.5 | Optischer Sensor an der Prüfeinrichtung, 1=kein- bzw. schwTeil vorhanden, NC |
| 8 | E0.6 | Induktiver Sensor an der Prüfeinrichtung, 1= metallisches Teil vorhanden, NO |
| 9 | E0.7 | Linearausgabe 1 Schieber ausgefahren, NO |
| 10 | E1.0 | Linearausgabe 2 Schieber ausgefahren, NO |
| 11 | E1.1 | Reflexionslichtschranke am Bandende, NC |
| 12 | E1.2 | Reflexionslichtschranke an der Teileablage, NC |
| 13 | E1.3 | Leuchtdrucktaster Rot, NC |
| 14 | E1.4 | Leuchtdrucktaster Grün, NO |
| 15 | E1.5 | Leuchtdrucktaster Blau, NO |
| 16 | E1.6 | Wahlschalter Automatik Manuell, 1 =Automatik |
| 17 | E1.7 | Rastschalter für Not-Aus, NC |
| 18 | GND | GND |
| 19 | n.c. | n.c. |
| 20 | 24V+ | 24V+ Versorgungsspannung |
| 21 | A4.0 | Relais Motor für Bandsteuerung nach rechts |
| 22 | A4.1 | Relais Motor für Bandsteuerung nach links |
| 23 | A4.2 | Schieber am Fallmagazin einfahren |
| 24 | A4.3 | Schieber am Fallmagazin ausfahren |
| 25 | A4.4 | Schieber am Linearausgang 1 ausfahren, 1=ausf., 0=einf. |
| 26 | A4.5 | Schieber am Linearausgang 2 ausfahren, 1=ausf., 0=einf. |
| 27 | A4.6 | Reserve |
| 28 | A4.7 | Reserve |
| 29 | A5.0 | Lampe Anzeige Qualität Good |
| 30 | A5.1 | Lampe Anzeige Qualität Bad |
| 31 | A5.2 | Leuchtdrucktaster Anzeige Rot |
| 32 | A5.3 | Leuchtdrucktaster Anzeige Grün |
| 33 | A5.4 | Leuchtdrucktaster Anzeige Blau |
| 34 | A5.5 | Leuchtanzeige LA1 Farbe Rot |
| 35 | A5.6 | Leuchtanzeige LA2 Farbe Grün |
| 36 | A5.7 | Reserve |
| 37 | GND | GND |

Analog-Buchsen

| | | |
|---|---|---|
| ROT | AE | Analogwert Höhenmessung |
| SW | M | Analog-Masse |

Gemäß Figur 1 dagegen ist an die digitale Schnittstelle 14 eine externe Steuerung 43 nicht angeschlossen. Stattdessen kann der Lehrkoffer 1 mit einer eigenen bzw. internen, elektronischen Steuerung versehen sein, die baulich innerhalb des Kofferunterteils 15 integriert ist.

In der vergrößerten Darstellung der Figur 3 wird deutlich, wie das Förderband 5 Werkstücke 7 an den digitalen Sensoren 10, 11, 12 und dem Ultraschallsensor 16, jeweils in deren Abtastbereich, vorbeiführt. Die drei digitalen Sensoren 10, 11, 12 dienen der Werkstückerkennung: Der dem Werkstückspender 8, 9 nächstliegend angeordnete, kapazitive Sensor 10 stellt fest, ob ein Werkstück 7 vom Förderband 5 vorbeigefahren wird oder nicht. Der in der vom Werkstückspender 9 ausgehenden Förderrichtung 19 nachgeordnete, optische Sensor 11 stellt fest, ob es sich bei dem Werkstück um ein dunkles beziehungsweise schwarzes Teil oder um ein weißes Kunststoffteil oder ein Metallteil handelt. Mittels des in Förderrichtung 19 zuletzt angeordneten, induktiven Sensors 12 lässt sich feststellen, ob es sich beim vorbeigeförderten Werkstück um ein Teil aus metallischem Werkstoff oder um ein Teil aus weißem/schwarzem Kunststoff handelt. Zudem können die optischen und induktiven Sensoren auch die Nicht-Existenz eines Werkstücks detektieren und mit einem entsprechenden Binärsignal an die Steuerung 43 weitergeben.

Die Signalzustände der drei digitalen Sensoren 10, 11, 12 zur Werkstückerkennung lassen sich tabellarisch wie folgt zusammenfassen:

| | **High** | **Low** |
|---|---|---|
| Erster Sensor kapazitiv | jedes vorbeifahrende Teil | kein Teil |
| Zweiter Sensor optisch | Kunststoff schwarz | kein Teil, Metall, Kunststoff weiß |
| Dritter Sensor induktiv | nur Metall | kein Teil, Kunststoff weiß/schwarz |

Für die Werkstückerkennung ergibt sich dann folgende Logik:

| **Werkstück** | **Sensor kapazitiv** | **Sensor optisch** | **Sensor induktiv** |
|---|---|---|---|
| Schwarzes Teil | High | High | Low |
| Weißes Teil | High | Low | Low |
| Metall Teil | High | Low | High |
| ein Teil | Low | Low | Low |

Ein den digitalen Sensoren '10, 11, 12 in Förderrichtung 19 nachfolgender Ultraschallsensor 16 erstreckt sich galgenartig oberhalb bzw. über das Förderband 5 und ist am Koffer-Oberboden 14 Ober ein Befestigungsteil 20 verankert, das mit Abstand von der Längsseite des Förderbandes 5 angeordnet ist. Ferner ist aus Figur 3 der Ausgang 21 des Werkstückspenders 8, 9 erkennbar, in dem ein Werkstück 7 zum Verschieben auf das Förderband 5 durch den Linearschieber 9 (siehe Figur 2) bereit liegt.

Gemäß Figuren 2 und 3 ist der Lehrkoffer 1 auf seinem Oberboden, dort in peripherer Lage, mit einem Industrietastenfeld beziehungsweise einer Tastenleiste 22 versehen, das etwa parallel zum Förderband 1 verläuft. Es umfasst eine Starttaste 23, um den Prüfvorgang zu beginnen. Um diesen abzubrechen, oder um das Lehrsystem zurück zu setzen, ist im Tastenfeld 22 eine Stopptaste 24 vorgesehen. Ferner umfasst das Tastenfeld 22, das eine längliche, parallel zum Förderband 5 verlaufende Leistenform besitzt, eine Funktionskontrolltaste 25 ("FC"). Mit der FC-Taste 25 lässt sich zur Funktionskontrolle jede einzelne Funktion schrittweise der Reihe nach manuell abrufen, so dass ein industriell gängiger Einrichtbetrieb nachgebildet werden kann. Alle drei genannten Tasten 23, 24, 25 sind beispielsweise als Leuchtdrucktaster ausgeführt, die vorzugsweise in unterschiedlichen Farben leuchten. Ferner umfasst das Tastenfeld bzw. die Tastenleiste 22 einen manuell betätigbaren Wahlschalter 26, beispielsweise Drehschalter, mit dem vom Automatikbetrieb auf Manuellbetrieb und umgekehrt umgestellt werden kann. Ist mit dem Wahlschalter 26 Manuellbetrieb eingestellt, lässt sich durch Betätigen der Funktionskontrolltaste 25 jede Funktion der Reihe nach abrufen. Beispielsweise lässt sich der zum Werkstückfallmagazin 8 gehörige Linearschieber 9 durch Drücken der FC-Taste 25 ausfahren und durch ein zweites Betätigen der FC-Taste 25 wieder unter das Fallmagazin 8 einfahren.

Gemäß Figuren 2 und 3 umfasst die Tastenleiste ferner zwei Zustandsanzeigen 27 ("LA1", Farbe rot) und 28 ("LA2", Farbe grün). Die rote Zustandsanzeige 27 leuchtet, wenn ein Fehler vorliegt, und die grüne Zustandsanzeige 28 signalisiert ordnungsgemäßen Betrieb. Ferner ist im Eckbereich des Koffer-Oberbodens 14, der Stirnseite der Tastenleiste 22 gegenüberliegend, ein manuell betätigbarer Not-Aus-Taster 29, beispielsweise in der Ausführung als Rastschalter, in hervorgehobener Stellung und farbig deutlich markiert angeordnet. Mit diesem kann das Lehrsystem umgehend in den stromlosen Zustand versetzt werden.

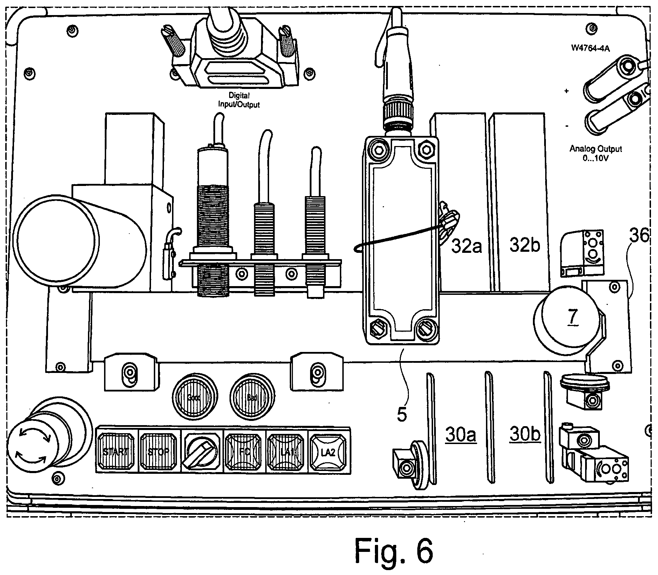

Gemäß Figur 2 sind am anderen Förderband-Endbereich als dem, welcher der Aufnahmeeinrichtung 6 am nächsten liegt, im gezeichneten Beispiel zwei Sortierlagerstellen 30a, 30b angeordnet. Deren Werkstück-Einschubrichtungen 31 verlaufen etwa quer zur Förderrichtung 19. Die Einschuböffnungen der Sortierlagerstellen 30a, 30b sind einer der beiden Längsseiten des Förderbandes 5 zugewandt. An der anderen Längsseite des Förderbandes 5 befinden sich Linearschieber 32a, 32b, deren Längs- und Verstellrichtungen ebenfalls etwa quer zur Förderrichtung 19 verlaufen und mit den Einschuböffnungen der Sortierlagerstellen 30a, 30b jeweils fluchten. Dadurch ist jeder Sortierlagerstelle 30a, 30b ein Linearschieber 32a, 32b zugeordnet, und auf dem Förderband 5 befindliche Werkstücke 7 können je nach auf Sensorauswertung basierender Ansteuerung mittels der jeweiligen Linearschieber 32a, 32b gezielt in eine der beiden Sortierlagerstellen 30a, 30b verschoben werden. Dies erfolgt allerdings nur, wenn die Auswertung der Sensorausgangssignale in der Steuerung 43 zu einem positiven Ergebnis geführt hat. Dies wird durch Ansteuerung einer der beiden Qualitätsanzeigelampen 33, 34, die zwischen der Tastenleiste 22 und dem Förderband 5 nebeneinander liegend angeordnet sind, mit der Aufschrift "Good" signalisiert. Kommt die Steuerung 43 bei Auswertung der Sensor-Ausgangssignale zum Negativ-Ergebnis "Bad", wird die entsprechende Qualitätsanzeigelampe 34 zum Leuchten angesteuert. Die den Sortierlagerstellen 30a, 30b zugeordneten Linearschieber 32a, 32b werden solchenfalls nicht betätigt. Infolgedessen kommt das für schlecht befundene Werkstück mit weiterem Transport durch das Förderband in Förderrichtung 19 zur Anlage an eine am Förderbandende angeordnete Ausschusslagerstelle 35, wie in Fig. 6 gezeigt. Diese ist im realisierten Ausführungsbeispiel mit einem in die Oberbodenplatte eingeschraubten Prellbock 36 realisiert, welcher auf seiner der Förderrichtung 19 zugewandten Seite eine konkave Krümmung 37 zur zentrierenden Aufnahme des geförderten Werkstücks 7 aufweist. Das von der Steuerung 43 für schlecht befundene Werkstück lässt sich so stabil platzieren. Zur Überlaufsicherung werden die beiden Sortierlagerstellen 30a, 30b durch eine erste Lichtschranke 38 und die Ausschusslagerstelle 35 durch eine zweite Lichtschranke 39 abgetastet bzw. überwacht. Sobald ein Werkstück auf einer der Lagerstellen durch eine Lichtschranke detektiert wird, generiert die davon informierte Steuerung 43 einen Betriebsstopp, bis die betroffene Lagerstelle 30a, 30b, 35 durch Entnahme des Werkstücks wieder freigegeben wird. Wie an sich bekannt, lassen sich die Lichtschranken mit einer Sender/Empfängereinheit auf der einen Seite und einem passiven Reflektor auf der anderen, gegenüberliegenden Seite realisieren.

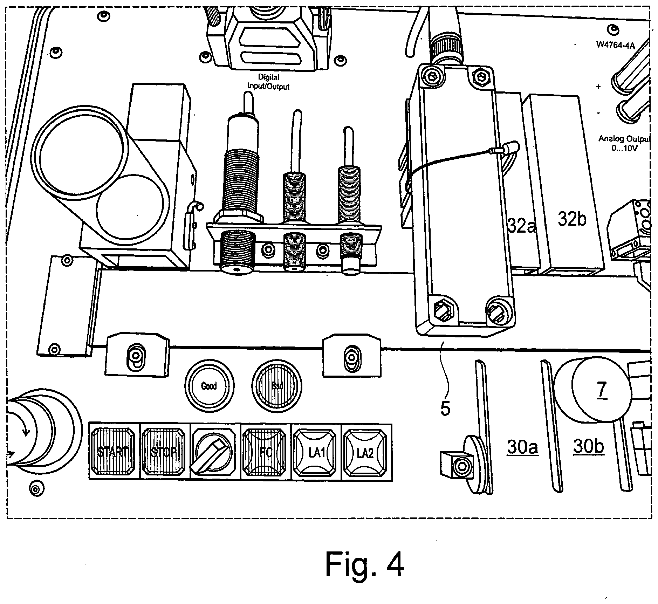

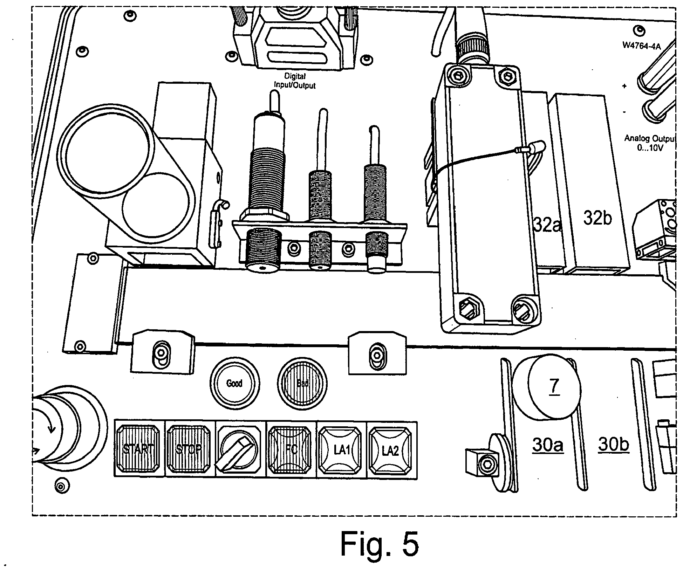

In den Figuren 4-6 ist das Sortierergebnis veranschaulicht. Je nach Sensorsignale und deren Auswertung in der elektronischen Steuerung 43 werden die Sortierlagerstellen 30a, 30b durch die Linearschieber 32a, 32b mit als "Good" bewerteten Werkstücken 7 bestückt oder bei "Bad"-Bewertung wird ein Ausschuss-Werkstück in Anschlag an den Prellbock 36 der Ausschuss-Lagerstelle 35 gebracht.

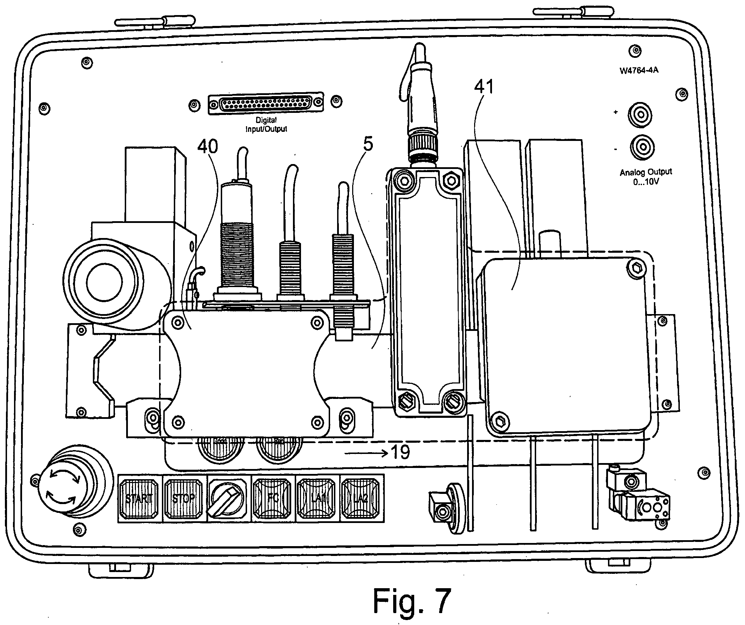

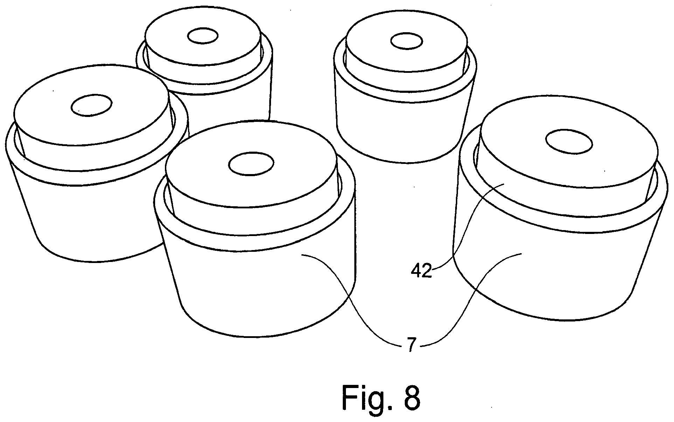

Die Ausführungsformen nach Figur 1 und Figur 7 unterscheiden sich von der nach Figuren 2 und 3 durch die erfindungsgemäße zusätzliche Anordnung zweier drahtlos per Funk arbeitender RFID-Schreib-/Lesegeräte 40, 41 in Förderrichtung 19 hintereinander und jeweils über dem Förderband 5. Das in Förderrichtung 19 zuerst angeordnete RFID-Schreib-/Lesegerät 40 wird von der Steuerung 43 nur zum Arbeiten in der Betriebsart "Lesen" angesteuert, das zweite RFID-Schreib-/Lesegerät 41 nur in der Betriebsart "Schreiben". Mit dieser Anordnung bzw. Betriebsweise der beiden RFID-Geräte 40, 41 lässt sich beispielsweise folgender Verfahrensablauf didaktisch veranschaulichen: Der von der Steuerung 43 betätigte elektromotorisch verfahrbare Linearschieber 9 platziert ein Werkstück 7 aus dem Werkstückfallmagazin 8 auf das Förderband 5. Im Zuge der Förderbewegung in Förderrichtung 19 wird das ausgeschobene Werkstück nacheinander an den oben genannten, drei digitalen Sensoren 10, 11, 12 vorbeibewegt und von diesen abgetastet. Ferner wird das Werkstück 7 zur Höhenmessung auf dem Förderband 5 unterhalb des Ultraschallsensors 16 durch den entsprechend gebildeten Spalt hindurchbewegt. Durch Auswertung der Binärsignale der digitalen Sensoren 10, 11, 12 sowie des Analogsignals des Ultraschallsensors 16 wird in der Steuerung 43 ein Datensatz gebildet, der mittels des in Förderrichtung zweiten RFID-Schreib-/Lesegerät 41 auf einen RFID-Chip 42 (vgl. Fig.8) auf dem jeweiligen Werkstück 7 drahtlos per Funk geschrieben wird. Dieses wurde vorher mittels des Förderbandes 5 dafür in die Funkrelchwelte des zweiten RFID-Geräts gebracht. Daraufhin wird die Förderrichtung des Förderbandes 5 umgekehrt, so dass das Werkstück 7 mit dem nun beschriebenen RFID-Chip In die Reichweite des in originärer/gezeichneter Förderrichtung 19 ersten RFID-Schrelb-/Lesegeräts 40 gelangt. Dieses wird von der Steuerung 43 zum Auslesen des RFID-Chips des betroffenen Werkstücks 7 angesteuert. Daraufhin wird das Förderband 5 zum Einnehmen der eingezeichneten Förderrichtung 19 in Richtung zum Prellbock 36 angesteuert. Je nach aus dem RFID-Chip des Werkstücks 7 ausgelesenen Datensatz wird entweder einer der beiden Linearschieber 32a, 32b zur Verstellung in eine jeweils zugeordnete Sortierlagerstelle 30a, 30b betätigt, oder das Werkstück wird in die Ausschuss-Lagerstelle 35 zur Anlage an die konkave Krümmung 37 des Prellbocks 36 transportiert. Dieser Prüf- und Sortierablauf lässt sich entsprechend in der internen oder externen Steuerung 43 des Lehrsystems programmtechnisch zu Übungszwecken implementieren.

Die in Figur 8 gezeigten, fünf Werkstücke 7 unterscheiden sich teilweise in ihren Höhen, durch den verwendeten Werkstoff (einerseits Metall, andererseits Kunststoff) und durch eine weiße oder schwarze Oberfläche. Sie besitzen jeweils eine zylindrische Grundform, entsprechend der Grundform des Werkstückfallmagazins 8. Auf ihren oberen Stirnseiten sind jeweils RFID-Chips 42 angebracht, die wie oben beschrieben in eine bidirektionale Kommunikationsverbindung mit den RFID-Schreib-/Lesegeräten 40, 41 treten können.

Gemäß Figur 9 ist der Lehrkoffer 1 steuerungstechnisch mit einer frei speicherprogrammierbaren Steuerung 43 über ein Anschlusskabel 44 verbunden, dessen Stecker in die Buchsen der digitalen Ein-/Ausgangsschnittstelle 14a des Lehrkoffers 1 eingeführt ist. Zudem sind die Verbindungsleitungen 45 der Analogstecker 18 (vgl. Figur 2), welche die Analogsignale der Höhenmessung durch den Ultraschallsensor 16 führen, in Analog-Eingangsbuchsen 46 der Steuerung 43 eingesteckt. Durch diese Steuerungssignal-Kopplungen ist der Lehrkoffer 1 mit seiner Vielzahl von Funktionen von der Steuerung 43 kontrollierbar. Diese weist zudem ein TouchPanel bzw. Touch-Screen 47 auf, welche die Tastenleiste bzw. das Industrietastenfeld 22 des Lehrkoffers 1 komfortabel ergänzen kann. Insbesondere können über das Touch-Panel bzw. Touch-Screen 47 Steuerungsprogramme für die Funktionalitäten des Lehrkoffers 1 eingegeben bzw. eingeübt werden.

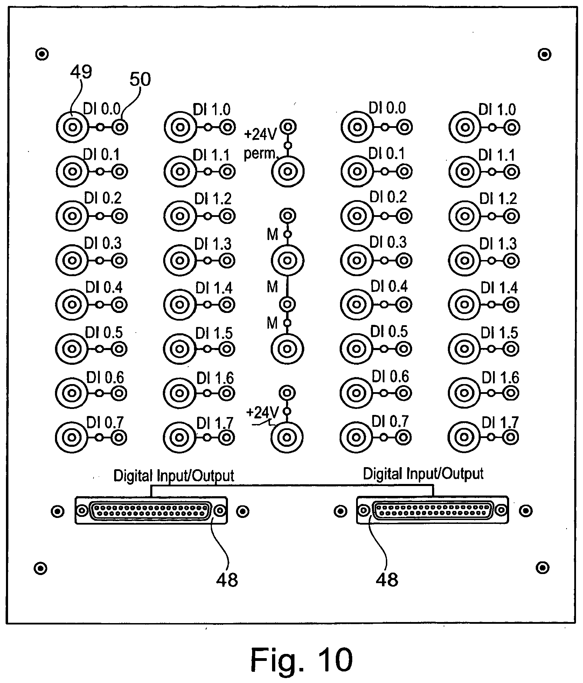

Gemäß Figur 10 sind in die frontseitig dargestellte Adapterplatte im unteren Rand zwei gleich ausgeführte Mehrpolbuchsen 48 eingelassen, wobei entsprechende Pins der beiden Mehrpolbuchsen auf der Plattenrückseite miteinander parallel verschaltet sind. Die zur Schnittstelle 14a des Lehrkoffers gehörige Mehrpolbuchse besitzt ebenfalls die gleiche Ausführung, Pinbelegung und Polanzahl. Ferner sind in die Adapterplatte erste Einzelbuchsen 49 mit vier Millimeter Durchmesser und zweite Einzelbuchsen 50 mit zwei Millimeter eingelassen und in vertikal nebeneinander verlaufende Reihen mit je acht Buchsen aufgeteilt. Die Einzelbuchsen 49, 50 dienen zum Einstecken von Laborleitungssteckern, über welche dann auf die Pins der Mehrpolstecker zugegriffen werden kann. Ober die vier Millimeter- bzw. zwei Millimeter-Einzeibuchsen 49, 50 können also jeweils Pins der Mehrpol-Buchsen 48 kontaktiert werden. Eine Vier-Millimeter-Einzelbuchse 49 und eine Zwei-Millimeter-Einzelbuchse 50 sind paarweise über eine gemeinsame Leuchtdiode zusammengefasst, die anzeigt, ob aktive Spannung oder Datenfluss vorherrscht. Die Leuchtdiode leuchtet nicht, wenn der Strom ausgeschaltet ist oder kein Datenfluss stattfindet. Gemäß dargestelltem Ausführungsbeispiel werden die zwei äußeren linken Vertikalreihen mit Einzelbuchsen 49, 50 als digitale Eingänge, und die beiden äußeren rechten Vertikalreihen mit Einzelbuchsen 49, 50 als digitale Ausgänge eingesetzt. Einzelne Pins der Mehrpolstecker 48 können über die Einzelbuchsen 49, 50 jeweils abgegriffen werden und einer in den Anschlüssen inkompatiblen Speicherprogrammierbaren Steuerung (SPS) zugeführt werden. Umgekehrt kann die SPS über diese Einzelbuchsen 49, 50 und eine der beiden Mehrpolbuchsen 48 den Lehrkoffer auch steuern, wenn dessen Schnittstelle 14a über ein Anschlusskabel mit der jeweiligen Mehrpolbuchse 48 verbunden ist. Mit anderen Worten, über die Vier-Millimeter- oder Zwei-Millimeter-Einzelbuchsen 49, 50 kann von zwei unterschiedlichen inkompatiblen Systemen auf alle Pins der jeweiligen Mehrpolbuchse 48 zugegriffen und auch eingespeist werden. Ist allerdings die SPS anschlusskompatibel mit dem Lehrkoffer 1, ist der Einsatz der in Figur 10 gezeigten Adapterplatte nicht notwendig.

### Bezugszeichenliste

- 1: Lehrkoffer
- 2: Kofferdeckel
- 3: Scharnierverbindung
- 4: Grundrahmen
- 5: Förderband
- 6: Aufnahmeeinrichtung
- 7: Werkstück
- 8: Werkstückfallmagazin
- 9: Linearschieber
- 10: Kapazitiver Sensor
- 11: Optischer Sensor
- 12: Induktiver Sensor
- 13: Winkelprofl
- 14: Oberboden
- 14a: Schnittstelle
- 15: Kofferunterteil
- 16: Ultraschallsensor
- 17: Analogbuchsen
- 18: Analogstecker
- 19: Förderrichtung
- 20: Befestigungsteil
- 21: Werkstückspender-Ausgang
- 22: IndustrieTastenfeld, Tastenleiste
- 23: Starttaste
- 24: Stopptaste
- 25: Funktionskontrolltaste
- 26: Wahlschalter
- 27: Zustandsanzeige Rot
- 28: Zustandsanzeige Grün
- 29: NOT-AUS-Taster
- 30a,30b: Sortierlagerstellen
- 31: Werkstück-Einschubrichtung
- 32a,32b: Linearschieber
- 33: Qualitätsanzeigelampe "Good"
- 34: Qualitätsanzeigelampe "Bad"
- 35: Ausschuss-Lagerstelle
- 36: Prellbock
- 37: Konkave Krümmung
- 38: Erste Lichtschranke
- 39: Zweite Lichtschranke
- 40: RFID-Schreib-/Lesegerät
- 41: RFID-Schreib-/Lesegerät
- 42: RFID-Chip
- 43: Speicherprogrammierbare Steuerung
- 44: Anschlusskabel
- 45: Verbindungsleitung
- 46: Analog-Eingangsbuchsen
- 47: Touchpanel bzw. Touchscreen
- 48: Mehrpolbuchse
- 49: 4mm-Einzelbuchse
- 50: 2mm-Einzelbuchse

## Patentansprüche

1. Didaktisches Lehrverfahren, mit einem didaktisch demonstrativen Prüfen und Sortieren unterschiedlicher Werkstücke (7), indem diese mit einem oder mehreren Sensormitteln (10,11,12,16) auf ihre Beschaffenheit hin abgetastet werden, und die am Ausgang oder an den Ausgängen der Sensormittel resultierenden Abtastsignale zu ihrer Verarbeitung einer Steuerung (43) zugeführt werden, welche abhängig von den verarbeiteten Abtastergebnissen des jeweiligen Werkstücks (7) ein oder mehrere Transport-, Förder- und/oder Positioniermittel (5,9,32a,32b) so ansteuert, dass das abgetastete Werkstück (7) entsprechend seiner Beschaffenheit an eine zugeordnete Sortier-Lagerstelle abgelegt wird, **dadurch gekennzeichnet, dass** das Werkstück (7) mit einem drahtlos mit Daten beschreibbaren und auslesbaren Funketikett (42) versehen und mit einem drahtlos per Funk arbeitenden Schreibmittel (41) in Wirkungsverbindung gebracht wird, welches die Steuerung (43) zum Beschreiben des Funketiketts (42) des abgetasteten Werkstücks (7) mit Informationen entsprechend den verarbeiteten Abtastsignalen aus den Sensormitteln ansteuert, nachdem das Werkstück (7) über ein Förderband (5) in einer Förderrichtung (19) an den Sensormitteln (10,11,12,16) vorbeibewegt und von diesen abgetastet wurde, und dass anschließend mittels der Steuerung das Werkstück (7) mit der beschriebenen Funketikette über das Förderband (5) entgegen der Förderrichtung (19) in Wirkungsverbindung mit einem drahtlos per Funk arbeitenden Lesemittel (40) gebracht wird, über welches daraufhin die Steuerung abhängig vom Leseergebnis die Transport-, Förder- und/oder Positioniermittel so ansteuert, dass das abgetastete Werkstück (7) in Förderrichtung (19) über das Förderband (5) transportiert und entsprechend seiner Beschaffenheit an eine vorbestimmte Sortier-Lagerstelle (30a,30b;35) abgelegt wird.

2. Verfahren Anspruch 1, **gekennzeichnet durch** einen, gegebenenfalls alternativ oder zusätzlich zu einem Automatikbetrieb, selektierbaren Manuell-Betrieb, bei dem auf Betätigung eines oder mehrerer, manuell betätigbarer Eingabeelemente (26,25) je ein einzelner Schritt des Prüfens und/oder Sortierens sukzessive durchgeführt wird.

3. Verfahren nach einem der vorangehenden Ansprüche, **dadurch gekennzeichnet, dass** das jeweilige Werkstück (7) mittels des oder der Sensormittel (10,11,12,16) auf Anwesenheit, Farbe, Helligkeit, Graustufen, Werkstoff und/oder geometrische Abmessungen hin abgetastet beziehungsweise geprüft wird.

4. Didaktische Lehrvorrichtung, insbesondere Lehrkoffer, zur Durchführung des Verfahrens nach einem der vorangehenden Ansprüche, mit einem System zum Prüfen und Sortieren unterschiedlicher Werkstücke (7), welches Prüf- und Sortiersystem umfasst:
- eine Aufnahmeeinrichtung (6) zum Bereithalten und Zuführen der Werkstücke (7),
- ein oder mehrere Sensormittel (10,11,12,16) zum Erkennen, Abtasten oder Prüfen der Werkstücke (7)
- eine oder mehrere Sortier-Lagerstellen (30a,30b;35) zur geordneten Ablage der geprüften Werkstücke (7),
- ein oder mehrere Werkstück-Positioniermittel (5,9,32a,32b), in deren Reichweite die Aufnahmeeinrichtung (6), die Sensormittel (10,11,12,16) und die Sortier-Lagerstellen (30a,30b;35) angeordnet sind, und
- eine interne elektronische Steuerung oder eine Schnittstelle zum Anschluss einer externen elektronischen Steuerung (43), welche Steuerung jeweils mit der Aufnahmeeinrichtung (6), dem oder den Sensormitteln (10,11,12,16), dem oder den Positioniermitteln (5,9,32a,32b) und/oder den Sortier-Lagerstellen (30a,30b;35) zu deren koordinierten Betätigung oder Auswertung steuerungstechnisch gekoppelt ist, **dadurch gekennzeichnet, dass** das Prüf- und Sortiersystem ein oder mehrere, jeweils drahtlos per Funk arbeitende Schreib- und/oder Lesemittel (40,41) umfasst, die mit der Steuerung (43) gekoppelt und einem drahtlos mit Daten beschreibbaren und auslesbaren Funketikett (42) eines jeweiligen Werkstücks (7) zugeordnet sind, wobei das Werkstück (7) mit dem Funketikett (42) versehen ist, und dass die Steuerung (43) zur Bewegung oder Positionierung des jeweiligen Werkstücks (7), zum Verarbeiten der Ausgangssignale der Sensormittel (10,11,12,16) und zum Beschreiben des Werkstück-Funketiketts (42) nach dem Abtasten des Werkstücks (7) durch die Sensormittel (10, 11, 12, 16) und zum anschließenden Auslesen des Werkstück-Funketiketts (42) derart programmierbar oder sonst einstellbar ist, dass das Funketikett mit einem drahtlos per Funk arbeitenden Schreibmittel (41) in Wirkungsverbindung gebracht wird, welches die Steuerung (43) zum Beschreiben des Funketiketts (42) des abgetasteten Werkstücks (7) mit Informationen entsprechend den verarbeiteten Abtastsignalen aus den Sensormitteln ansteuert, nachdem das Werkstück (7) über ein Förderband (5) in einer Förderrichtung (19) an den Sensormitteln (10,11,12,16) vorbeibewegt und von diesen abgetastet wurde, und dass anschließend mittels der Steuerung das Werkstück (7) mit der beschriebenen Funketikette über das Förderband (5) entgegen der Förderrichtung (19) in Wirkungsverbindung mit einem drahtlos per Funk arbeitenden Lesemittel (40) gebracht wird, über welches daraufhin die Steuerung abhängig vom Leseergebnis die Transport-, Förder- und/oder Positioniermittel so ansteuert, dass das abgetastete Werkstück (7) in Förderrichtung (19) über das Förderband (5) transportiert und entsprechend seiner Beschaffenheit an eine vorbestimmte Sortier-Lagersteile (30a,30b;35) abgelegt wird.

5. Lehrvorrichtung nach Anspruch 4, **dadurch gekennzeichnet, dass** das oder die Positioniermittel (5,9,32a,32b) eine Fördereinrichtung (5) umfassen, welche eingangsseitig der Aufnahmeeinrichtung (6) und ausgangsseitig den Sortier-Lagerstellen (30a,30b,35) zugeordnet und/oder derart angeordnet ist, dass das jeweilige Werkstück (7) an dem oder den Sensormitteln (10,11,12,16) und/oder gegebenenfalls an dem oder den Schreib- und/oder Lesemitteln (40,41) vorbei führbar ist.

6. Lehrvorrichtung nach Anspruch 5, **gekennzeichnet durch** eine längliche Grundform mit einer Längsrichtung, wobei sich die Fördereinrichtung (5) entlang des größten Teils der Längsrichtung erstreckt.

7. Lehrvorrichtung nach einem der Ansprüche 4 bis 6, **dadurch gekennzeichnet, dass** das oder die Positioniermittel (5,9,32a,32b) ein oder mehrere mechanische Werkstück-Verstellorgane, beispielsweise Linearschieber (9,32a,32b), umfassen, die zum Bewegen der Werkstücke (7) angeordnet sind.

8. Lehrvorrichtung nach einem der Ansprüche 4 bis 7, **gekennzeichnet durch** eine oder mehrere, manuell betätigbare Ein- und/oder Ausgabemittel beispielsweise in Form eines beleuchtbaren Tastenfelds (22) oder Touchscreens (47), wobei die eine oder mehreren Ein- und/oder Ausgabemittel mit der Steuerung (43) gekoppelt oder koppelbar und/oder baulich integriert sind.

9. Lehrvorrichtung nach einem der Ansprüche 4 bis 8, **gekennzeichnet durch** eine Sicherheitseinrichtung, beispielsweise mit manuell betätigbaren Not-Aus-Taster (29), zur Unterbrechung einer Stromversorgung der Lehrvorrichtung.

10. Lehrvorrichtung nach einem der Ansprüche 4 bis 9, **gekennzeichnet durch** die Anordnung einer oder mehrerer, beispielsweise mit Lichtschranken (38,39) realisierten Überlaufsicherungen in der Reichweite des oder der Positioniermittel (5,32a,32b) und/oder Sortierlagerstellen (30a,30b), und die eine oder mehreren Überlaufsicherungen ausgangseitig mit der Steuerung (43) zum Still- oder Rücksetzen der Positioniermittel (5,9,32a,32b) verbunden sind.

11. Lehrvorrichtung nach einem der Ansprüche 4 bis 10, **dadurch gekennzeichnet, dass** die Werkstücke (7) Werkstoffe aus Metall oder Kunststoff und/oder mit unterschiedlichen geometrischen Abmessungen umfassen.

12. Lehrvorrichtung nach einem der Ansprüche 4 bis 11, **dadurch gekennzeichnet, dass** das oder die Sensormittel (10,11,12,16) zum Erkennen, Abtasten oder Prüfen der Werkstücke (7) kapazitive, optische, induktive und/oder Ultraschall-Sensoren umfassen.

13. Lehrvorrichtung nach einem der Ansprüche 4 bis 12, ausgebildet als Lehrkoffer (1) mit wiederholt auf- und zumachbaren Koffer-Deckel (2), **dadurch gekennzeichnet, dass** die Werkstück-Aufnahmeeinrichtung (6) eine derart zur Innenseite des Deckels (2) ausgerichtete Füllöffnung aufweist, dass diese mit Zumachen des Koffer-Deckels (2) verschließbar ist.

14. Lehrvorrichtung nach einem der Ansprüche 4 bis 13, **dadurch gekennzeichnet, dass** die Schnittstelle (14a) zum Anschluss einer externen Steuerung (43) mit einer Adaptereinrichtung beispielsweise in plattenartiger Bauform realisiert oder ergänzt ist, wobei die Adaptereinrichtung mit einer variierbaren Anschlussbelegung zur Anpassung an oder Verbindung mit anschlusstechnisch inkompatiblen, externen Steuerungen ausgebildet ist.

## Claims

1. A didactic teaching method, with didactically demonstrative checking and sorting of different workpieces (7), the latter being sampled with one or more sensor means (10, 11, 12, 16) for their composition, and the sampling signals resulting at the outlet or at the outlets of the sensor means being delivered to a controller (43) for processing, which controller actuates one or more transporting, conveying and/or positioning means (5, 9, 32a, 32b) dependently upon the processed sampling results for the respective workpiece (7) such that the sampled workpiece (7) is set down at an assigned sorting/storage point according to its composition, **characterised in that** the workpiece (7) is provided with a radio tag (42) on which data can be written and be read out wirelessly and is operatively connected to a writing means (41) that works wirelessly by radio, which writing means actuates the controller (43) to write information on the radio tag (42) of the sampled workpiece (7) with information according to the processed sampling signals from the sensor means after the workpiece (7) has been moved by a conveyor belt (5) in a direction of conveyance (19) past the sensor means (10, 11, 12, 16) and has been sampled by the latter, and that next, by means of the controller, the workpiece (7) with the written on radio tag is operatively connected to a reading means (40) working wireless by radio by the conveyor belt (5) in the direction opposite to the direction of conveyance (19), by means of which reading means the controller then actuates the transporting, conveying and/or positioning means dependently upon the reading result such that the sampled workpiece (7) is transported (5) by the conveyor belt (5) in the direction of conveyance (19) and is set down at a predetermined sorting/storage point (30a, 30b; 35) according to its composition.

2. The method according to Claim 1, **characterised by** selectable manual operation, optionally alternatively or in addition to automatic operation, wherein upon actuating one or more manually actuatable input elements (26, 25), in each case an individual step of checking and/or sorting is successively carried out.

3. The method according to either of the preceding claims, **characterised in that** the respective workpiece (7) is sampled or checked by means of the sensor means (10, 11, 12, 16) for presence, colour, brightness, levels of grey, material and/or geometric dimensions.

4. A didactic teaching apparatus, in particular a teaching case, for implementing the method according to any of the preceding claims, with a system for checking and sorting different workpieces (7), which checking and sorting system comprises:
- a receiving device (6) for holding in readiness and delivering the workpieces (7),
- one or more sensor means (10, 11, 12, 16) for identifying, sampling or checking the workpieces (7),
- one or more sorting/storage points (30a, 30b; 35) for setting down the checked workpieces (7) in an ordered manner,
- one or more workpiece positioning means (5, 9, 32a, 32b) within the reach of which the receiving device (6), the sensor means (10, 11, 12, 16) and the sorting/storage points (30a, 30b; 35) are arranged, and
- an internal electronic controller or an interface for the connection of an external electronic controller (43), which controller is respectively coupled for control purposes to the receiving device (6), the sensor means (10, 11, 12, 16), the positioning means (5, 9, 32a, 32b) and/or the sorting/storage points (30a, 30b; 35) for the co-ordinated actuation or evaluation of the latter, **characterised in that** the checking and sorting system comprises one or a number of writing and/or reading means (40, 41) respectively working wirelessly by radio and which are coupled to the controller (43) and assigned to a radio tag (42) of a respective workpiece (7) on which data can be written and read out wirelessly, the workpiece (7) being provided with the radio tag (42), and that the controller (43) can be programmed or otherwise set to move or position the respective workpiece (7), to process the output signals of the sensor means (10, 11, 12, 16) and to write on the workpiece radio tag (42) after the workpiece (7) has been sampled by the sensor means (10, 11, 12, 16) and to then read out the workpiece radio tag (42) such that the radio tag is operatively connected to a writing means (41) working wirelessly by radio, which writing means actuates the controller (43) to write information on the radio tag (42) of the sampled workpiece (7) according to the processed sampling signals from the sensor means after the workpiece (7) has been moved past the sensor means (10, 11, 12, 16) by a conveyor belt (5) in a direction of conveyance (19) and has been sampled by said sensor means, and that then the workpiece (7) with the written on radio tag is operatively connected to a reading means (40) working wirelessly by radio by means of the controller via the conveyor belt (5) in the direction opposite to the direction of conveyance (19), by means of which reading means the controller then actuates the transporting, conveying and/or positioning means dependently upon the reading result such that the sampled workpiece (7) is transported by the conveyor belt (5) and is set down at a pre-determined sorting/storage point (30a, 30b; 35) according to its composition.

5. The teaching apparatus according to Claim 4, **characterised in that** the positioning means (5, 9, 32a, 32b) includes or include a conveying device (5) which is assigned to the receiving device (6) on the input side and to the sorting/storage points (30a, 30b, 35) on the output side and/or is positioned such that the respective workpiece (7) can be guided past the sensor means (10, 11, 12, 16) and/or optionally past the writing and/or reading means (40, 41).

6. The teaching apparatus according to Claim 5, **characterised by** an elongate basic shape with a longitudinal direction, the conveying device (5) extending along the largest part of the longitudinal direction.

7. The teaching apparatus according to any of Claims 4 to 6, **characterised in that** the positioning means (5, 9, 32a, 32b) comprises or comprise one or more mechanical workpiece adjusting elements, for example linear slides (9, 32a, 32b) that are arranged to move the workpieces (7).

8. The teaching apparatus according to any of Claims 4 to 7, **characterised by** one or more manually actuatable inputting and/or outputting means, for example in the form of an illuminatable key panel (22) or touch screen (47), the one or more inputting and/or outputting means being coupled or being able to be coupled to the controller (43) and/or being integrated structurally.

9. The teaching apparatus according to any of Claims 4 to 8, **characterised by** a safety device, for example with a manually actuatable emergency off button (29) to interrupt a supply of current to the teaching apparatus.

10. The teaching apparatus according to any of Claims 4 to 9, **characterised by** the arrangement of one or more overload safety devices made for example with light barriers (38, 39) within the reach of the positioning means (5, 32a, 32b) and/or sorting and storage points (30, 30b), and the one or more overload safety devices are connected on the output side to the controller (43) in order to stop or re-set the positioning means (5, 9, 32a, 32b).

11. The teaching apparatus according to any of Claims 4 to 10, **characterised in that** the workpieces (7) comprise materials made of metal or plastic and/or with different geometric dimensions.

12. The teaching apparatus according to any of Claims 4 to 11, **characterised in that** the sensor means (10, 11,12, 16) for identifying, sampling or checking the workpieces (7) comprises or comprise capacitive, optical, inductive and/or ultrasonic sensors.

13. The teaching apparatus according to any of Claims 4 to 12, made in the form of a teaching case (10) with a case lid (2) that can be repeatedly opened and closed, **characterised in that** the workpiece receiving device (9) has a filling opening orientated towards the inside of the lid (2) such that said opening can be closed when the case lid (2) is closed.

14. The teaching apparatus according to any of Claims 4 to 13, **characterised in that** the interface (14a) for the connection of an external controller (43) is made with or is supplemented by an adapter device, for example in a plate-like design, the adapter device being designed with a variable connection configuration for adaptation or connection to external controllers with incompatible connection technology.

## Revendications

1. Procédé d'enseignement didactique, comprenant un test et un tri didactique démonstratif de différentes pièces (7), dans lequel celles-ci sont testées selon leur nature par balayage avec un ou plusieurs moyens de détection (10, 11, 12, 16), et les signaux échantillonnés résultants sur la sortie ou les sorties des moyens de détection sont envoyés pour leur traitement à un dispositif de commande (43) qui, en fonction du traitement des résultats de l'échantillonnage de chacune des pièces (7), contrôle un ou plusieurs moyens de transport, de convoyage et/ou de positionnement (5, 9, 32a, 32b) de telle sorte que la pièce (7) testée soit stockée en fonction de sa nature dans un réceptacle de stockage de tri correspondant, **caractérisé en ce que** la pièce (7) est pourvue d'une étiquette radio (42) sans fil qui contient des données pouvant être écrites et lues et qui est en relation fonctionnelle avec un moyen d'écriture (41) travaillant sans fil par radio que le dispositif de commande (43) actionne pour écrire dans l'étiquette radio (42) de la pièce (7) testée des informations correspondant aux signaux échantillonnés provenant des moyens de détection, après que la pièce (7) sur une bande transporteuse (5) soit passée dans une direction de transport (19) devant les moyens de détection (10, 11, 12, 16) et ait été testée par ceux-ci, et **en ce que** par la suite des moyens du dispositif de commande mettent en relation fonctionnelle la pièce (7) comportant l'étiquette radio écrite sur la bande transporteuse (5) se déplaçant à l'encontre de la direction de transport (19) avec un moyen de lecture (40) sans fil fonctionnant par radio, par lequel ensuite le dispositif de commande actionne en fonction du résultat de lecture les moyens de transport, de convoyage et/ou de positionnement de façon que la pièce (7) testée soit transportée dans la direction de transport (19) sur la bande de transport (5) et soit déposée en fonction de sa nature sur un réceptacle de stockage de tri (30a, 30b ; 35) prédéterminé.

2. Procédé selon la revendication 1, caractérisé, le cas échéant en alternative ou en complément à un actionnement automatique, par un actionnement manuel sélectionnable, par lequel lors de la commande d'un ou plusieurs éléments d'entrée de commande manuelle (26, 25), on effectue en succession chaque étape de test et/ou de tri.

3. Procédé selon l'une des revendications précédentes, **caractérisé en ce que** la pièce (7) respective est échantillonnée ou respectivement testée au moyen du ou des moyens de détection (10, 11, 12, 16) selon sa présence, sa couleur, sa luminosité, son niveau de gris, sa matière et/ou ses dimensions géométriques.

4. Dispositif d'enseignement didactique, en particulier valise d'enseignement, pour la mise en oeuvre du procédé selon l'une des revendications précédentes, ayant un système de test et de tri de différentes pièces (7), lequel système de test et de tri comprend :
- un dispositif de réception (6) pour tenir disponible et fournir la pièce (7),
- un ou plusieurs moyens de détection (10, 11, 12, 16) pour détecter, échantillonner ou tester les pièces (7)
- un ou plusieurs réceptacles de stockage de tri (30a, 30b ; 35) pour l'organisation des pièces (7) testées,
- un ou plusieurs moyens de positionnement de pièces (5, 9, 32a, 32b), dans la portée desquels sont agencés le dispositif de positionnement (6), les moyens de détection (10, 11, 12, 16) et les réceptacles de stockage de tri (30a, 30b ; 35), et
- un dispositif de commande électronique interne ou une interface pour le raccordement d'un dispositif de commande électronique externe (43), lequel dispositif de commande est accouplé par une technologie de contrôle respectivement avec le dispositif de réception (6), avec le ou les moyens de détection (10, 11, 12, 16), avec le ou les moyens de positionnement (5, 9, 32a, 32b) et/ou avec les réceptacles de stockage de tri (30a, 30b ; 35) pour le fonctionnement ou l'évaluation coordonnée, **caractérisé en ce que** le système de test et de tri comprend un ou plusieurs moyens d'écriture et/ou de lecture (40, 41) travaillant chacun sans fil par radio, lesquels étant couplés avec le dispositif de commande (43) et avec pour chaque pièce (7) une étiquette radio (42) sans fil qui contient des données pouvant être écrites et lues, dans lequel la pièce (7) est munie de l'étiquette radio (42), **en ce que** le dispositif de commande (43) est programmable ou autrement réglable pour le déplacement ou le positionnement de chaque pièce (7), pour le traitement du signal de sortie du moyen de détection (10, 11, 12, 16) ou pour écrire l'étiquette radio de pièce (42) après le test de la pièce (7) au moyen des moyens de détection (10, 11, 12, 16) et pour ultérieurement lire l'étiquette radio de pièce (42), **en ce que** l'étiquette radio est en liaison fonctionnelle avec un moyen d'écriture (41) sans fil fonctionnant par radio, lequel est contrôlé par le dispositif de commande (43) pour l'écriture de l'étiquette radio (42) de la pièce (7) testée avec les informations résultant du traitement des signaux de test provenant des moyens de détection, après que la pièce (7) ait été déplacée sur une bande transporteuse (5) dans une direction de transport (19) jusqu'aux moyens de détection (10, 11, 12, 16) et ait été testée par ceux-ci, et **en ce que** ensuite des moyens du dispositif de commande mettent en relation fonctionnelle la pièce (7) comportant l'étiquette radio écrite sur la bande transporteuse (5) se déplaçant à l'encontre de la direction de déplacement (19) avec un moyen de lecture (40) sans fil fonctionnant par radio, par lequel ensuite le dispositif de commande actionne en fonction du résultat de lecture les moyens de transport, de convoyage et/ou de positionnement de façon que la pièce (7) testée soit transportée dans la direction de transport (19) sur la bande de transport (5) et soit déposée en fonction de sa nature sur un réceptacle de stockage de tri (30a, 30b ; 35) prédéterminé.

5. Dispositif d'enseignement selon la revendication 4, **caractérisé en ce que** le ou les moyens de positionnement (5, 9, 32a, 32b) comprennent un dispositif de déplacement (5), lequel est, en son entrée, disposé en correspondance et/ou centré avec le dispositif de réception (6), et en sa sortie, avec les réceptacles de stockage de tri (30a, 30b ; 35), de telle sorte que chaque pièce (7) peut passer devant le ou les moyens de détection (10, 11, 12, 16) et/ou si besoin devant le ou les moyens d'écriture et/ou de lecture (40, 41).

6. Dispositif d'enseignement selon la revendication 5, **caractérisé par** une forme de base allongée avec une direction longitudinale, dans lequel le dispositif de transport (5) s'étend en majeure partie le long de la direction longitudinale.

7. Dispositif d'enseignement selon l'une des revendications 4 à 6, **caractérisé en ce que** le ou les moyens de positionnement (5, 9, 32a, 32b) comprennent un ou plusieurs organes mécaniques de réglage de pièce, par exemple des glissières linéaires (9, 32a, 32b), lesquels sont agencés pour déplacer les pièces (7).

8. Dispositif d'enseignement selon l'une des revendications 4 à 7, **caractérisé par** un ou plusieurs moyens d'entrée et/ou de sortie actionnables manuellement par exemple sous forme d'un clavier éclairable (22) ou d'un écran tactile (47), dans lequel lesdits un ou plusieurs moyens d'entrée et/ou de sortie sont couplés au dispositif de commande (43) ou lui sont intégrés de façon couplée ou structurellement.

9. Dispositif d'enseignement selon l'une des revendications 4 à 8, **caractérisé par** un dispositif de sécurité, par exemple un bouton d'arrêt d'urgence (29) actionnable manuellement, pour interrompre une alimentation électrique du dispositif d'enseignement.

10. Dispositif d'enseignement selon l'une des revendications 4 à 9, **caractérisé par** un ou plusieurs moyens de sécurité anti dépassement, par exemple réalisés par des barrières de lumière (38, 39), dans la portée du ou des moyens de positionnement (5, 32a, 32b) et/ou des réceptacles de stockage de tri (30a, 30b), et lesdits un ou plusieurs moyens de sécurité anti dépassement sont reliés selon leur sortie au dispositif de commande (43) pour arrêter ou réinitialiser les moyens de positionnement (5, 9, 32a, 32b).

11. Dispositif d'enseignement selon l'une des revendications 4 à 10, **caractérisé en ce que** les pièces (7) comportent des matériaux métalliques ou de matière plastique et/ou ont différentes dimensions géométriques.

12. Dispositif d'enseignement selon l'une des revendications 4 à 11, **caractérisé en ce que** le ou les moyens de détection (10, 11, 12, 16) pour détecter, échantillonner ou tester les pièces (7) comprennent des capteurs capacitifs, optiques, inductifs et/ou des capteurs à ultrasons.

13. Dispositif d'enseignement selon l'une des revendications 4 à 12, conçu comme une valise d'enseignement (1) avec un couvercle de valise (2) pouvant être ouvert et fermé de façon répétitive, **caractérisé en ce que** le moyen de réception de pièce (6) comprend un orifice de remplissage aligné avec le côté intérieur du couvercle (2), de telle sorte que celui-ci est verrouillable par la fermeture du couvercle de valise (2).

14. Dispositif d'enseignement selon l'une des revendications 4 à 13, **caractérisé en ce que** l'interface (14a) pour la liaison d'un dispositif de commande (43) externe est réalisée ou complétée avec un dispositif d'adaptation par exemple en forme de plaque, ledit dispositif d'adaptation ayant une capacité de liaison variable pour s'ajuster ou se connecter à des contrôleurs externes à techniques de liaison incompatibles.
